# EUROPÄISCHE PATENTSCHRIFT

(11) **EP 2 286 159 B1**
(45) Veröffentlichungstag und Bekanntmachung des Hinweises auf die Patenterteilung: **23.07.2014**
(21) Anmeldenummer: 09749911.5
(22) Anmeldetag: 22.05.2009
(51) Int. Cl.: F24H 9/02, F24H 9/16

(54) **ELEKTRISCHES HAUSHALTSGERÄT**
ELECTRIC HOUSEHOLD APPLIANCE
APPAREIL ÉLECTROMÉNAGER

(30) Priorität: 23.05.2008 CN 200810123314
(43) Veröffentlichungstag der Anmeldung: 23.02.2011
(73) Patentinhaber: BSH Bosch und Siemens Hausgeräte GmbH, 81739 München (DE)
(72) Erfinder: XU, Haihong, Yangzhou Jiangsu 225107 (CN); SCHRÖDER, Bernd, Nanjing, Jiangsu 210008 (CN)
(86) Internationale Anmeldenummer: PCT/EP2009/056214
(87) Internationale Veröffentlichungsnummer: WO 2009/141421

(56) Entgegenhaltungen:
- DE-A1-102005 023 157
- DE-U1- 29 606 742
- GB-A- 2 346 540

## Beschreibung

Die vorliegende Erfindung betrifft ein elektrisches Haushaltsgerät, insbesondere Warmwasserspeicher oder Boiler, umfassend ein Gehäuseteil, eine Abdeckung und ein Verbindungsmittel zum Verbinden der Abdeckung mit dem Gehäuseteil, wobei in der Abdeckung eine Öffnung für die Montage und/oder Demontage des Verbindungsmittels vorgesehen ist

### Stand der Technik

In Heißwasserbereitern und ähnlichen elektrischen Haushaltsgeräten kann sich aufgrund der zwischen den Teilen bestehenden Temperaturdifferenz auf den kälteren Teilen Kondenswasser bilden. Heißwasserbereiter mit Wasserspeicherung weisen zwischen dem Wassertank (auch Innenbehälter genannt) und dem Gehäuse eine Schicht wärmeisolierendes Thermomaterial auf, um die Wärmeverluste möglichst zu verringern. Konstruktionsbedingt ist es bei Heißwasserbereitern jedoch nicht möglich, die Teile des Wassertanks, an denen das Heizelement und/oder andere Einzelteile montiert werden, mit Thermomaterial zu bedecken. Daher ist die Temperatur dieser nicht mit Thermomaterial bedeckten Teile relativ niedrig. Wenn wasserhaltige Luft mit diesen Teilen in Kontakt kommt, kann sich Kondenswasser bilden. Im Falle von vertikalen Heißwasserbereitern bildet sich das Kondenswasser noch leichter, weil die nicht mit Thermomaterial bedeckten Teile den tiefsten Teilen des Wassertanks entsprechen, d.h. sie befinden sich im unteren Bereich des Geräts. Um zu verhindern, dass dieses Kondenswasser Beschädigungen der Teile im Inneren des Heißwasserbereiters hervorruft, muss das Kondenswasser aus dem Inneren des Heißwasserbereiters abgeleitet werden. In der Regel sind auf dem Gehäuse des Heißwasserbereiters Öffnungen für die Ableitung bzw. für das Abfließen des Kondenswassers angebracht. Bei vertikalen Heißwasserbereitern sind solche Ableitungsöffnungen in der Regel in der Bodenwand des Heißwasserbereiters angebracht.

Andererseits wird montage- und/oder wartungsbedingt die Bodenwand des Heißwasserbereiters in der Regel gesondert bereitgestellt und mit den anderen Teilen des Heißwasserbereiters verbunden. Bei der Realisierung dieser Verbindung ist ein Verbindungsmittel erforderlich, bei welchem es sich um ein Verbindungsmittel, insbesondere Schrauben u.ä. handeln kann und welches die Bereitstellung von Durchgangslöchern in der Bodenwand erfordert. Eine hohe Anzahl an Durchgangslöchern in der Bodenwand können zu einer Verringerung der Bodenfestigkeit führen und sind einem ansprechenden Äußeren abträglich.

Eine weitere Vorrichtung ist in der DE 10 2005 023157 A1, welche ein Haushaltsgerät, insbesondere Wasserkocher, mit einem Gehäuse und mit einer lösbar daran befestigten Boden offenbart.

### Der Erfindung zugrundeliegende Aufgabe

Daher ist Aufgabe der vorliegenden Erfindung ein elektrisches Haushaltsgerät bereitzustellen, welches Kondenswasser zuverlässig ableitet und bei welchem die Anzahl an Öffnungen in der äußeren Oberfläche des Gehäuses verringert werden kann.

### Erfindungsgemäße Lösung

Die Lösung der gestellten Aufgabe gelingt durch ein elektrisches Haushaltsgerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Diese Erfindung bezieht sich auf ein elektrisches Haushaltsgerät, das Folgendes umfasst: eine Abdeckung sowie ein Verbindungsmittel zur Verbindung der Abdeckung mit einem Gehäuseteil des elektrischen Haushaltsgeräts, wobei in der Abdeckung eine Öffnung für die Montage und/oder Demontage des Verbindungsmittels vorhanden ist, wobei die Öffnung dergestalt eingerichtet ist um zumindest einen Teil des Entwässerungsweges zum Ableiten des im Inneren des elektrischen Haushaltsgeräts entstandenen bzw. gebildeten Kondenswassers zu bilden.

Dadurch kann das Kondenswasser über die mit dem Verbindungsmittel verbundene Öffnung abgeleitet werden, oder anders ausgedrückt, die zur Ableitung des Kondenswassers dienende Öffnung kann vom Verbindungsmittel benutzt werden. Daher kann das Kondenswasser aus dem Inneren des elektrischen Haushaltsgeräts abgeleitet werden, um zu vermeiden, dass Kondenswasser Beschädigungen an anderen Teilen hervorruft. Dies kann realisiert werden, ohne dass die zusätzliche oder spezielle Anbringung von Ableitungsöffnungen in dem Gehäuse erforderlich ist, wodurch die Anzahl an Öffnungen in der äußeren Oberfläche des Gehäuses verringert werden kann, was ferner für ein ansprechendes Äußeres des elektrischen Haushaltsgeräts vorteilhaft ist.

Erfindungsgemäß wird das Verbindungsmittel in einem vorgegebenen bzw. vorbestimmten Abstand zur Öffnung gehalten, wodurch die Möglichkeiten des Kontakts von Kondenswasser mit dem Verbindungsmittel verringert werden. Im Weiteren wird die Möglichkeit der Entstehung von Korrosion am Verbindungsmittel durch Kontakt mit Kondenswasser verhindert, oder zumindest wird die am Verbindungsmittel hervorgerufene Korrosion verringert. Dies ist besonders wichtig, wenn das Verbindungsmittel Metallteile enthält.

Das Gehäuseelement gemäß der Erfindung umfasst eine Verbindungswand zur Verbindung des Verbindungsmittels und weist zur Öffnung einen Abstand auf.

Ein Kanal ist auch vorgesehen der sich von der Öffnung zur Verbindungswand erstreckt, wobei die Seitenwand des Kanals über mindestens ein Durchgangsloch verfügt, das einen Teil des Entwässerungswegs bildet.

### Bevorzugte Ausgestaltungen der Erfindung

Andere alleinstehende oder mit anderen Merkmalen verbundene Merkmale, die als Besonderheiten dieser Erfindung betrachtet werden, werden in den nachstehenden begleitenden Ansprüchen beschrieben.

Es ist bevorzugt, dass das Gehäuseelement mindestens einen Teil der Bodenwand des elektrischen Haushaltsgeräts bildet, wodurch auf einfache Weise der Entwässerungsweg montiert werden kann, damit das Kondenswasser zum Gehäuseelement fließt und/oder tropft, und ebenfalls die ungehinderte Ableitung des Kondenswassers aus dem Inneren des elektrischen Haushaltsgeräts bereitgestellt werden kann.

Um die Ableitung des Kondenswassers zu unterstützen, wird die Öffnung in bevorzugter Weise an der tiefsten Stelle des beschriebenen Gehäuseelements angeordnet.

Es ist bevorzugt, dass die Verbindungswand in senkrechter Richtung zur Öffnung mit der Öffnung mindestens teilweise überlappt. Dadurch kann das Verbindungsmittel nach dem Durchstoßen der Öffnung sehr einfach mit der Verbindungswand verbunden werden. Außerdem kann auf diese Weise effektiv das Eindringen von externem Wasser durch die Öffnung in das Innere des elektrischen Haushaltsgeräts verringert werden.

Es ist bevorzugt, dass zwischen der Verbindungswand und der Öffnung die Seitenwand des Kanals vorhanden ist, wird das Eindringen von externem Wasser in das Innere des elektrischen Haushaltsgeräts zuverlässig unterbunden, und gleichzeitig kann das Kondenswasser außerdem über das Durchgangsloch dieser Seitenwand das Innere des elektrischen Haushaltsgeräts verlassen.

Um dem Kondenswasser ein ungehindertes Verlassen des elektrischen Haushaltsgeräts zu ermöglichen, und um zu vermeiden, dass im Inneren des elektrischen Haushaltsgeräts Kondenswasser zurückbleibt, umfasst das Gehäuseelement gemäß einer Ausführungsform eine mit einer Öffnung versehenen Wand. Die Innenseite bzw. die Innenfläche dieser Wand bildet die untere Begrenzung der Öffnung. Dadurch wird gewährleistet, dass kein Kondenswasser im Inneren des elektrischen Haushaltgeräts zurückbleibt.

Für die Vereinfachung von Montage oder Demontage des Verbindungsmittels und um einen Kontakt zwischen Kondenswasser und Verbindungsmittel großmöglich zu vermeiden, verfügt das Verbindungsmittel gemäß einer Ausführungsform über ein Kopfteil, das im Inneren des Kanals aufnehmbar ist, wobei die Tiefe des Kanals höher bzw. länger als die Länge des Kopfteils in vertikaler Richtung zur Öffnung ist.

In bevorzugter Weise weist die Seitenwand eine annähernd zylindrische Form auf. Dies ist vorteilhaft für die Herstellung und außerdem für die ungehinderte Ableitung bzw. das Abfließen des Kondenswassers aus dem Inneren des Haushaltgeräts.

Gemäß einer bevorzugten Ausführungsform ist die Verbindungswand an der Innenseite des Gehäuseelements angeordnet bzw. angebracht. Im Falle vertikaler Heißwasserbereiter ist dies besonders vorteilhaft für die Verringerung oder sogar Unterbindung des Kontakts zwischen Verbindungsmittel und Kondenswasser. Weiterhin besteht die Möglichkeit, dass die äußere Oberfläche des Gehäuseelements relativ eben ist, wodurch Verletzungen von Nutzern oder Monteuren durch äußere hervorstehende Teile des Gehäuseelements im Verlauf der Nutzung und Montage verringert werden können.

Bei dem Verbindungsmittel handelt es sich vorzugsweise um Schrauben.

Diese Erfindung kann auch auf Kühlschränke, Waschmaschinen und weitere elektrische Haushaltsgeräte angewendet werden. Beispielsweise kann die Erfindung bei Heißwasserbereitern oder Warmwasserspeichern (Boilern) angewendet werden, welche einen Wassertank zur Wasserspeicherung umfassen, wobei die Längsachse des Wassertanks senkrecht zur Waagerechten ist.

### Kurzbeschreibung der Zeichnung

Weitere vorteilhafte Ausgestaltungen werden nachfolgend an Hand eines in der Zeichnung dargestellten Ausführungsbeispieles näher beschrieben.

Es zeigen schematisch:
Fig. 1 ein partielles Schnittbild des Heißwasserbereiters eines bevorzugten Ausführungsbeispiels der vorliegenden Erfindung; und
Fig. 2 eine vergrößerte Darstellung des Teils aus Fig. 1, der das Verbindungsmittel umfasst.

### Ausführliche Beschreibung anhand eines Ausführungsbeispiels

Bei der nachfolgenden Beschreibung eines Ausführungsbeispiels der vorliegenden Erfindung bezeichnen gleiche Bezugszeichen gleiche oder vergleichbare Komponenten.

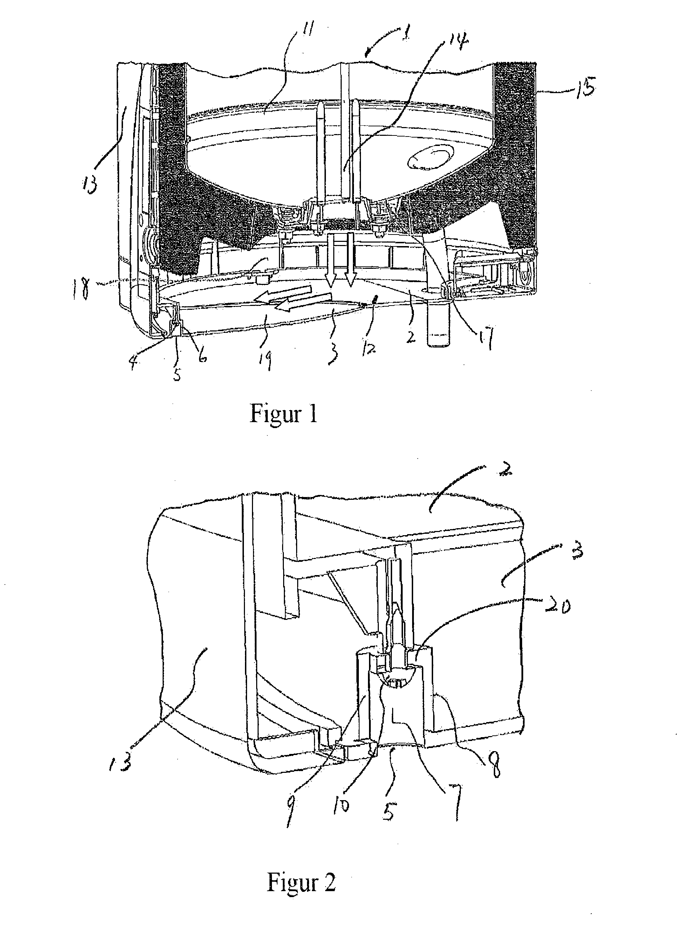

Es wird auf die Zeichnung verwiesen, zuerst insbesondere auf die Fig. 1. In diesem Ausführungsbeispiel verfügt der Heißwasserbereiter 1 bzw. Warmwasserspeicher 1 über einen Wassertank 11, der den Hohlraum für die Wasserspeicherung definiert. Im Betrieb wird das Wasser im Wassertank 11 durch das Heizelement 14 erhitzt. Das Heizelement 14 basiert vorzugsweise auf eine Widerstandsheizung und verfügt über einen Teil, der sich in den beschriebenen Hohlraum erstreckt. Das Heizelement 14 ist vorzugsweise mit dem Boden des Wassertanks 11 verbunden. In diesem Ausführungsbeispiel handelt es sich bei dem Heißwasserbereiter 1 um einen sogenannten vertikalen Heißwasserbereiter, das heißt, nach der Montage des Heißwasserbereiters 1 ist die Längsachse des Wassertanks 11 senkrecht zur Waagerechten.

Der Heißwasserbereiter 1 umfasst das Gehäuse 13, das den Wassertank 11 umschließt. Um die Wärmeverluste zu senken, wird der absolut größte Teil des Wassertanks 11 von der Wärmeisolationsschicht 15 bedeckt. Der Boden 17, an dem das beschriebene Heizelement 14 montiert wird, wird jedoch nicht von dieser Wärmeisolationsschicht 15 bedeckt. Was vertikale Heißwasserbereiter betrifft, so ist die Temperatur des Wassers, das mit diesem Boden 17 Kontakt hat, relativ niedrig im Verhältnis zu anderen Teilen oder Komponenten des Heißwasserbereiters. Deshalb ist die Temperatur des Bodens 17 des Wassertanks 11 relativ niedrig, während die Temperatur der anderen Teile relativ hoch ist und Wasserdampf entstehen kann. Beim Erreichen eines kritischen Punktes kann sich auf diesen relativ kühlen Teilen Kondenswasser bilden.

Zwischen der Bodenwand 12 des Gehäuses 13, dem Boden 17 des Wassertanks 11 sowie der Wärmeisolationsschicht 15 entsteht der Hohlraum 18. Das Kondenswasser, das sich auf dem Boden 17 des Wassertanks 11 sowie auf dem Heizelement 14 bildet, tropft aufgrund der Wirkung der Schwerkraft auf die Bodenwand 12 des Gehäuses 13 und fließt in Richtung der in Fig. 1 dargestellten Pfeile. Zuletzt wird es durch die auf dem Gehäuseelement 3 angebrachte bzw. ausgebildete Öffnung 5 aus dem Inneren des Heißwasserbereiters 1 abgeleitet. Dies wird nachfolgend im Detail beschrieben.

In diesem Ausführungsbeispiel ist das beschriebene Gehäuseelement 3 ein Teil der Bodenwand 12 des Gehäuses 13. Die Bodenwand 12 umfasst außerdem ein weiteres Element, welches mit dem Gehäuseelement 3 anschließend zusammen montiert wird. In diesem Ausführungsbeispiel handelt es sich bei diesem weiteren Element um den Hauptteil 2 des Gehäuses 13. In diesem Ausführungsbeispiel kann das Gehäuseelement 3 bei der Überprüfung und Wartung des Heißwasserbereiters 1 vom Hauptteil 2 demontiert werden. Es wird deshalb auch Wartungsabdeckung genannt. Der Hauptteil 2 verfügt über eine Kerbe, die der Gestalt des Gehäuseelements (Wartungsabdeckung) 3 entspricht. Nach der Montage des Gehäuseelements 3 auf den Hauptteil 2 weist die Bodenwand 12 eine runde Gestalt auf. In diesem Ausführungsbeispiel ist das Gehäuseelement 3 demontierbar bzw. abnehmbar mit dem Hauptteil 2 verbunden. Dadurch besteht die Möglichkeit, den beschriebenen Hohlraum 18 zu öffnen, um eine Überprüfung, Wartung oder desgleichen durchzuführen.

Es wird nun auf Fig. 2 in Verbindung mit Fig. 1 verwiesen. Das Gehäuseelement 3 verfügt über eine Wand 19, die einen Teil der äußeren Oberfläche des Heißwasserbereiters 1 bildet, sowie ein Verbindungsteil 6 zur Befestigung des Gehäuseelements 3 und Hauptteils 2. Die innere Oberfläche bzw. Innenfläche der Wand 19 weist vorzugsweise einen bestimmten Krümmungsradiant auf. Die Öffnung 5 wird in der Wand 19 gebildet und durchdringt die Wand 19. Die Öffnung 5 steht über den Verbindungsteil 6 mit dem Hohlraum 18 in Strömungsverbindung, um das Kondenswasser abzuleiten. In diesem Ausführungsbeispiel wird die Öffnung 5 optimalerweise an der tiefsten Stelle der Wand 19 angebracht. Die Öffnung 5 dient vorzugsweise als Auslassöffnung für den Entwässerungsweg des Kondenswassers.

In diesem Ausführungsbeispiel ragt der Verbindungsteil 6 von der Innenfläche der Wand 19 hervor und liegt im Hohlraum 18 frei. Der Verbindungsteil 6 verfügt über eine Verbindungswand 20 zum Halten des Verbindungsmittels 4. Die Verbindungswand 20 hat in Richtung der Längsachse zur Wand 19 einen Abstand und überlappt zumindest teilweise mit der Öffnung 5. Die Verbindungswand 20 verfügt über eine Befestigungsöffnung (ohne Bezugszeichen), die annähernd parallel zur Öffnung 5 liegt, um die Verbindung zwischen Verbindungsmittel 4, Gehäuseelement 3 und Hauptteil 2 bereitzustellen. Der Verbindungsteil 6 verfügt über einen Kanal 7, der sich von der Öffnung 5 bis zu der Verbindungswand 20 erstreckt. In diesem Ausführungsbeispiel weist die Seitenwand 8 des Kanals 7 eine annähernd zylindrische Form auf.

Auf der Seitenwand 8 ist mindestens ein Durchgangsloch 9 angeordnet oder ausgebildet, welche eine Strömungsverbindung für die Öffnung 5 sowie den Kanal 7 zum Hohlraum 18 bereitstellt. Das auf der Bodenwand 12 tropfende Wasser kann über den Entwässerungsweg, der das Durchgangsloch 9 auf der Seitenwand 8, den Kanal 7 sowie die Öffnung 5 in der Wand 19 umfasst, abgeleitet werden. In diesem Ausführungsbeispiel bildet die Innenfläche der Wand 19 die untere Begrenzung des Durchgangslochs 9. Dadurch kann das Kondenswasser auf sehr einfache Weise in das Durchgangsloch 9 abfließen. Optimalerweise ist die untere Begrenzung des Durchgangslochs 9 die tiefste Stelle der Innenfläche der Wand 19.

In diesem Ausführungsbeispiel handelt es sich bei dem Verbindungsmittel 4 um Schrauben. Beim Zusammenbau wird der Rand des Gehäuseelements 3 zuerst mit dem Hauptteil 2 verbunden. Anschließend wird das Verbindungsmittel 4, nachdem es die Öffnung 5 sowie den Kanal 7 durchstoßen hat, in die Befestigungsöffnung der Verbindungswand 20 eingeführt. Zuletzt wird das Kopfteil 10 des Verbindungsmittels im Kanal 7 gehalten. Die Teile des Verbindungsmittels 4, die nach Außen aus dem Gehäuseelement 3 hervortreten, werden stabil in einer Aufnahmeöffnung (nicht markiert) des Hauptteils 2 aufgenommen. Dadurch werden die beiden Teile der Bodenwand 12, nämlich das Gehäuseelement 3 und das Hauptteil 2, zusammen befestigt. Da die nach Außen aus dem Gehäuseelement 3 hervortretenden Teile des Verbindungsmittels 4 in einer Aufnahmeöffnung aufgenommen werden, kann der Kontakts des Verbindungsmittels 4 mit Kondenswasser vermieden werden. Wenn eine Demontage des Gehäuseelements 3 erforderlich ist, wird vorzugsweise ein Werkzeug, zum Beispiel ein Schraubendreher, verwendet, um durch die Öffnung 5 das Innere des Kanals 7 zu erreichen und um das Verbindungsmittel 4 herauszuholen bzw. abzumontieren.

Wie in den Figuren dargestellt, ist die Länge H2 des Kopfteils 10 des Verbindungsmittels 4 kleiner als die Tiefe H1 des Kanals 7. Dadurch befindet sich der Kopfteil 10 an einer Stelle, die zur Öffnung 5 einen Abstand aufweist. Auf diese Weise wird der Kontakts vom Verbindungsmittel 4 zum Kondenswasser wirksam vermieden, wodurch eine Korrosion des Verbindungsmittels 4 verhindert wird.

Da die Öffnung 5 zur Montage und Demontage des Verbindungsmittels 4 gleichzeitig auch einen Teil des Entwässerungsweges des Kondenswassers darstellt, kann die Anzahl der Öffnungen in der Bodenwand 12 verringert werden.

Im vorstehenden Ausführungsbeispiel kann die Anzahl der Öffnungen in der äußeren Oberfläche bzw. der Außenfläche der Wartungsabdeckung des Gehäuseelements 3 verringert werden.

In einem anderen Ausführungsbeispiel können in dem Gehäuseelement 3 zwei oder mehr Öffnungen 5 für die Ableitung des Kondenswassers angebracht bzw. ausgebildet werden, wovon mindestens eine als ein weiteres Element zur Verbindung des Gehäuseelements 3 mit dem Heißwasserbereiter 1 dient.

### Bezugszeichenliste

- 1: Heißwasserbereiter
- 2: Hauptteil bzw. Gehäusehauptteil oder Gehäuseteil
- 3: Gehäuseelement bzw. Wartungsabdeckung oder Abdeckung
- 4: Verbindungsmittel
- 5: Öffnung
- 6: Verbindungsteil
- 7: Kanal
- 8: Seitenwand
- 9: Durchgangsloch
- 10: Kopfteil
- 11: Wassertank
- 12: Bodenwand
- 13: Gehäuse
- 14: Heizelement
- 15: Wärmeisolationsschicht
- 17: Boden
- 18: Hohlraum
- 19: Wand
- 20: Verbindungswand

## Patentansprüche

1. Elektrisches Haushaltsgerät (1), insbesondere Warmwasserspeicher, umfassend ein Gehäuseteil (2), eine Abdeckung (3) und ein Verbindungsmittel (4) zum Verbinden der Abdeckung (3) mit dem Gehäuseteil (2), wobei in der Abdeckung (3) eine Öffnung (5) für die Montage und/oder Demontage des Verbindungsmittels (4) vorgesehen ist, **dadurch gekennzeichnet, dass** die Öffnung (5) dergestalt eingerichtet ist, um zumindest einen Teil eines Entwässerungsweges zum Ableiten des im Inneren des elektrischen Haushaltsgeräts (1) gebildeten Kondenswassers zu bilden,
wobei das Verbindungsmittel (4) in einem voreingestellten Abstand zur Öffnung (5) gehalten wird, wobei die Abdeckung (3) eine Verbindungswand (20) zur Verbindung des Verbindungsmittels (4) umfasst und zur Öffnung (5) einen Abstand aufweist, und wobei ein Kanal (7) vorgesehen ist, der sich von der Öffnung (5) zur Verbindungswand (20) erstreckt, wobei die Seitenwand (8) des Kanals (5) über mindestens eine Durchgangsöffnung (9) verfügt, die einen Teil des Entwässerungswegs bildet.

2. Elektrisches Haushaltsgerät (1) gemäß Anspruch 1, **dadurch gekennzeichnet, dass** die Abdeckung (3) eine Wartungsabdeckung ist.

3. Elektrisches Haushaltsgerät (1) gemäß Anspruch 1 oder 2, **dadurch gekennzeichnet, dass** die Abdeckung (3) mindestens einen Teil der Bodenwand (12) des elektrischen Haushaltsgeräts (1) bildet.

4. Elektrisches Haushaltsgerät (1) gemäß einem der vorstehenden Ansprüche, **dadurch gekennzeichnet, dass** die Öffnung (5) an der tiefsten Stelle der Abdeckung (3) angebracht ist.

5. Elektrisches Haushaltsgerät (1) gemäß einem der vorstehenden Ansprüche, **dadurch gekennzeichnet, dass** die Verbindungswand (20) in senkrechter Richtung zur Öffnung (5) mit der Öffnung (5) mindestens teilweise überlappt.

6. Elektrisches Haushaltsgerät (1) gemäß Anspruch 1, **dadurch gekennzeichnet, dass** die Abdeckung (3) eine Wand (19) umfasst, in der die Öffnung (5) angebracht ist, wobei die Innenfläche der Wand (19) die untere Grenze der Durchgangsöffnung (9) bildet.

7. Elektrisches Haushaltsgerät (1) gemäß Anspruch 1 oder 6, **dadurch gekennzeichnet, dass** das Verbindungsmittel (4) über einen Kopfteil (10) verfügt, der in dem Kanal (7) aufgenommen wird, wobei die Tiefe (H1) des Kanals (7) größer als die Länge (H2) des Kopfteils (10) in senkrechter Richtung zur Öffnung (5) ist.

8. Elektrisches Haushaltsgerät (1) gemäß einem der Ansprüche 1 oder 5, **dadurch gekennzeichnet, dass** die Seitenwand (8) annähernd eine zylindrische Form aufweist.

9. Elektrisches Haushaltsgerät (1) gemäß einem der Ansprüche 1 oder 5 bis 7, **dadurch gekennzeichnet, dass** die Verbindungswand (20) an der Innenseite der Abdeckung (3) angebracht ist.

10. Elektrisches Haushaltsgerät (1) gemäß einem der vorstehenden Ansprüche, **dadurch gekennzeichnet, dass** es sich bei dem Verbindungsmittel (4) um eine Schraube handelt.

11. Elektrisches Haushaltsgerät (1) gemäß einem der vorstehenden Ansprüche, **dadurch gekennzeichnet, dass** es sich bei dem elektrischen Haushaltsgerät (1) um einen Heißwasserbereiter handelt, wobei der Heißwasserbereiter einen Wassertank zur Speicherung des Wassers umfasst und die Längsachse dieses Wassertanks (11) senkrecht zur Horizontalen steht.

## Claims

1. Electric household appliance (1), particularly a water heater, comprising a housing part (2), a cover (3) and a connecting means (4) for connecting the cover (3) to the housing part (2), wherein an opening (5) is provided in the cover (3) for mounting and/or dismounting the connecting means (4), **characterised in that** the opening (5) is designed to form at least one section of a drainage path for draining away the condensation accumulating inside the electric household appliance (1),
wherein the connecting means (4) is held at a predetermined distance from the opening (5), wherein the cover (3) features a connecting wall (20) for connecting the connecting means (4) and is at a distance from the opening (5), and wherein a duct (7) is provided which extends from the opening (5) to the connecting wall (20), wherein the side wall (8) of the duct (5) has at least one through-hole (9), which forms a part of the drainage path.

2. Electric household appliance (1) according to claim 1, **characterised in that** the cover (3) is a maintenance cover.

3. Electric household appliance (1) according to claim 1 or 2, **characterised in that** the cover (3) forms at least one part of the floor panel (12) of the electric household appliance (1).

4. Electric household appliance (1) according to one of the previous claims, **characterised in that** the opening (5) is made at the lowest point in the cover (3).

5. Electric household appliance (1) according to one of the previous claims, **characterised in that** the connecting wall (20) in the perpendicular direction to the opening (5) at least partly overlaps the opening (5).

6. Electric household appliance (1) according to claim 1, **characterised in that** the cover (3) comprises a wall (19), in which the opening (5) is made, wherein the inner surface of the wall (19) forms the lower boundary of the through-hole opening (9).

7. Electric household appliance (1) according to claim 1 or 6, **characterised in that** the connecting means (4) has a head piece (10) which is accommodated in the duct (7), wherein the depth (H1) of the duct (7) is greater than the length (H2) of the head part (10) in the perpendicular direction to the opening (5).

8. Electric household appliance (1) according to claim 1 or 5, **characterised in that** the side wall (8) has an approximately cylindrical shape.

9. Electric household appliance (1) according to claim 1 or one of claims 5 to 7, **characterised in that** the connecting wall (20) is attached to the inner side of the cover (3).

10. Electric household appliance (1) according to one of the previous claims, **characterised in that** the connecting means (4) involves a screw.

11. Electric household appliance (1) according to one of the previous claims, **characterised in that** the electric household appliance (1) involves a water heater, with the water heater comprising a water tank for storing the water and the longitudinal axis of this water tank (11) being at right angles to the horizontal.

## Revendications

1. Appareil électroménager (1), notamment chauffe-eau à accumulation, comprenant une partie de boîtier (2), un couvercle (3) et un moyen de liaison (4) destiné à relier le couvercle (3) avec la partie de boîtier (2), une ouverture (5) étant ménagée dans le couvercle (3) pour le montage et/ou le démontage du moyen de liaison (4), **caractérisé en ce que** l'ouverture (5) est configurée de manière à former au moins une partie d'un trajet d'évacuation d'eau destiné à décharger l'eau de condensation formée à l'intérieur de l'appareil électroménager (1),
le moyen de liaison (4) étant maintenu avec un écart préréglé par rapport à l'ouverture (5), le couvercle (3) comprenant une paroi de liaison (20) pour la liaison du moyen de liaison (4) et présentant un écart par rapport à l'ouverture (5), et un canal (7) étant ménagé, lequel s'étend de l'ouverture (5) vers la paroi de liaison (20), la paroi latérale (8) du canal (5) disposant d'au moins une ouverture de passage (9) qui forme une partie du trajet d'évacuation d'eau.

2. Appareil électroménager (1) selon la revendication 1, **caractérisé en ce que** le couvercle (3) est un couvercle de maintenance.

3. Appareil électroménager (1) selon la revendication 1 ou 2, **caractérisé en ce que** le couvercle (3) forme au moins une partie de la paroi de fond (12) de l'appareil électroménager (1).

4. Appareil électroménager (1) selon l'une quelconque des revendications précédentes, **caractérisé en ce que** l'ouverture (5) est placée à l'endroit le plus bas du couvercle (3).

5. Appareil électroménager (1) selon l'une quelconque des revendications précédentes, **caractérisé en ce que** la paroi de liaison (20) chevauche au moins en partie avec l'ouverture (5) en direction verticale par rapport à l'ouverture (5).

6. Appareil électroménager (1) selon la revendication 1, **caractérisé en ce que** le couvercle (3) comprend une paroi (19) dans laquelle est placée l'ouverture (5), la surface intérieure de la paroi (19) formant la limite inférieure de l'ouverture de passage (9).

7. Appareil électroménager (1) selon la revendication 1 ou 6, **caractérisé en ce que** le moyen de liaison (4) dispose d'une partie de tête (10) qui est logée dans le canal (7), la profondeur (H1) du canal (7) étant supérieure à la longueur (H2) de la partie de tête (10) en direction verticale par rapport à l'ouverture (5).

8. Appareil électroménager (1) selon l'une quelconque des revendications 1 ou 5, **caractérisé en ce que** la paroi latérale (8) présente approximativement une forme cylindrique.

9. Appareil électroménager (1) selon l'une quelconque des revendications 1 ou 5 à 7, **caractérisé en ce que** la paroi de liaison (20) est placée sur le côté intérieur du couvercle (3).

10. Appareil électroménager (1) selon l'une quelconque des revendications précédentes, **caractérisé en ce que** le moyen de liaison (4) est une vis.

11. Appareil électroménager (1) selon l'une quelconque des revendications précédentes, **caractérisé en ce que** l'appareil électroménager (1) est un chauffe-eau à accumulation, le chauffe-eau à accumulation comprenant un réservoir à eau destiné à stocker l'eau et l'axe longitudinal de ce réservoir à eau (11) étant perpendiculaire par rapport à l'horizontale.
